# EUROPEAN PATENT APPLICATION

(11) **EP 4 791 065 A1**
(43) Date of publication of application: **12.08.2026**
(21) Application number: 24889213.5
(22) Date of filing: 11.11.2024
(51) Int. Cl.: H04W 24/04, H04W 52/02, H04W 8/24, H04W 28/02, H04L 41/0833

(54) **METHOD AND APPARATUS FOR CONTROLLING COMMUNICATION IN CONSIDERATION OF POWER STATE OF TERMINAL IN WIRELESS COMMUNICATION SYSTEM**

(30) Priority: 10.11.2023 KR 20230155893
(71) Applicant: Samsung Electronics Co., Ltd., Suwon-si, Gyeonggi-do 16677 (KR)
(72) Inventor: PARK, Jungshin, Suwon-si, Gyeonggi-do 16677 (KR)
(74) Representative: Gulde & Partner
(86) International application number: PCT/KR2024/017758
(87) International publication number: WO 2025/101027

(57) **Abstract**

The present disclosure relates to a 5G or 6G communication system for supporting a higher data transmission rate. According to an embodiment of the present disclosure, an access and mobility management function (AMF) may receive, based on a change in an energy level of a terminal by a preset criterion or more, information about the energy level of the terminal from the terminal through a non-access stratum (NAS) control message, determine an energy operation mode based on the energy level of the terminal, and transmit information about the determined energy operation mode to the terminal.

## Description

### Technical Field

The present disclosure relates to a wireless communication system, and more particularly, to a method and apparatus for controlling communication by considering the power state of a terminal in a wireless communication system.

### Background Art

The 5th-generation (5G) mobile communication technology defines a wide frequency band to allow high transmission speed and new service and may also be implemented in an ultra-high frequency ("above 6 GHz") band referred to as millimeter wave (mmWave), such as 28 GHz and 39 GHz, as well as a below 6 GHz frequency ("sub 6 GHz") band such as 3.5 GHz. Also, in the case of the 6th-generation (6G) mobile communication technology referred to as the system beyond 5G communication (beyond 5G system), implementation in the terahertz (THz) band (e.g., 95 GHz to 3 THz band) is being considered to achieve a transmission speed that is 50 times the transmission speed of the 5G mobile communication technology and an ultra-low delay time that is one tenth of the delay time of the 5G mobile communication technology.

In the early stage of the 5G mobile communication technology, in order to support services and satisfy performance requirements for enhanced mobile broadband (eMBB), ultra-reliable low-latency communications (URLLC), and massive machine-type communications (mMTC), standardization has been performed on beamforming and massive MIMO for mitigating the path loss of radio waves in the ultra-high frequency band and increasing the propagation distance of radio waves, support of various numerologies (operation of multiple subcarrier intervals and the like) and dynamic operation of slot formats for efficient utilization of ultra-high frequency resources, initial access technology for supporting multi-beam transmission and broadband, definition and operation of bandwidth parts (BWPs), new channel coding methods such as low-density parity check (LDPC) codes for large-capacity data transmission and polar codes for reliable transmission of control information, L2 preprocessing, network slicing for providing dedicated networks specialized for particular services, and the like.

Currently, by considering services that the 5G mobile communication technology was intended to support, discussion for initial 5G mobile communication technology improvement and enhancement has been performed, and physical layer standardization for technologies such as vehicle-to-everything (V2X) for assisting the driving determination of autonomous vehicles and increasing the convenience of users based on the position and state information transmitted by the vehicles, new radio unlicensed (NR-U) for the purpose of system operations meeting various regulation requirements in unlicensed bands, NR terminal low power consumption technology (UE power saving), non-terrestrial network (NTN) that is terminal-satellite direct communication for securing a coverage in an area where communication with a terrestrial network is impossible, and positioning has been performed.

In addition, standardization of wireless interface architectures/protocols for technologies such as Industrial Internet of Things (IIoT) for supporting new services through linkage and integration with other industries, Integrated Access and Backhaul (IAB) for providing nodes for expanding network service areas by integrating a wireless backhaul link and an access link, Mobility Enhancement including Conditional Handover and Dual Active Protocol Stack (DAPS) Handover, and 2-step RACH for NR for simplifying a random access procedure has also been performed, and standardization of system architectures/services for 5G baseline architectures (e.g., Service-based Architecture and Service-based Interface) for grafting Network Function Virtualization (NFV) and Software-Defined Networking (SDN) technology, Mobile Edge Computing (MEC) for providing services based on the position of terminals, and the like has also been performed.

When such 5G mobile communication systems are commercialized, connected devices in the trend of explosive increase will be connected to the communication network and accordingly it is expected to require enhanced functions and performance of the 5G mobile communication system and integrated operation of connected devices. For this purpose, new research will be conducted on Extended Reality (XR) for efficiently supporting Augmented Reality (AR), Virtual Reality (VR), Mixed Reality (MR), and the like, 5G performance improvement and complexity reduction utilizing Artificial Intelligence (AI) and Machine Learning (ML), AI service support, metaverse service support, drone communication, and the like.

Also, the development of the 5G mobile communication systems may serve as a basis for the development of not only multi-antenna transmission technologies such as New Waveform, Full Dimensional MIMO (FD-MIMO), Array Antenna, and Large Scale Antenna for ensuring the coverage in the terahertz band of the 6G mobile communication technology, high-dimensional spatial multiplexing technologies using metamaterial-based lenses and antennas and Orbital Angular Momentum (OAM) to improve the coverage of terahertz band signals, and Reconfigurable Intelligent Surface (RIS) technologies, but also full duplex technologies for improving the frequency efficiency and system network of the 6G mobile communication technology, AI-based communication technologies utilizing satellites and AI from the design stage and embedding an end-to-end AI support function to realize system optimization, next-generation distributed computing technologies for realizing services with complexity beyond the limit of the terminal operation capability by utilizing ultrahigh-performance communication and computing resources, and the like.

### Disclosure of Invention

### Technical Problem

According to an embodiment of the present disclosure, an apparatus and method capable of providing an effective service according to the power of a terminal in a wireless communication system are provided.

### Solution to Problem

The present disclosure relates to a 5G or 6G communication system for supporting a higher data transmission rate. According to an embodiment of the present disclosure, an access and mobility management function (AMF) may receive, based on a change in an energy level of a terminal by a preset criterion or more, information about the energy level of the terminal from the terminal through a non-access stratum (NAS) control message, determine an energy operation mode based on the energy level of the terminal, and transmit information about the determined energy operation mode to the terminal.

### Advantageous Effects of Invention

According to an embodiment of the present disclosure, an apparatus and method capable of effectively providing a service in a wireless communication system may be provided.

Effects that may be obtained from the present disclosure are not limited to the effects mentioned above, and other effects not mentioned herein may be clearly understood from the following description by those of ordinary skill in the art.

### Brief Description of Drawings

FIG. 1 illustrates a wireless communication system to which a data transmission control method considering the energy state of a network is applied, according to an embodiment of the present disclosure.
FIG. 2 illustrates a series of signal procedures for controlling data transmission by considering the energy state of a terminal in a wireless communication system, according to an embodiment of the present disclosure.
FIG. 3 is a block diagram of a terminal according to an embodiment of the present disclosure.
FIG. 4 is a block diagram of a network function (NF) according to an embodiment of the present disclosure.

### Best Mode for Carrying out the Invention

According to an embodiment of the present disclosure, a method performed by an access and mobility management function (AMF) in a wireless communication system may include receiving, based on a change in an energy level of a terminal by a preset criterion or more, information about the energy level of the terminal from the terminal through a non-access stratum (NAS) control message, determining an energy operation mode based on the energy level of the terminal, and transmitting information about the determined energy operation mode to the terminal.

According to an embodiment of the present disclosure, in the method performed by the AMF in the wireless communication system, the information about the energy level of the terminal may include information about at least one of a remaining battery capacity of the terminal or the power consumption rate of the terminal.

According to an embodiment of the present disclosure, in the method performed by the AMF in the wireless communication system, the information about the energy operation mode may include information about at least one of a session through which the terminal is to transmit data or a type of a control message that the terminal is to transmit.

According to an embodiment of the present disclosure, the method performed by the AMF in the wireless communication system may further include restricting a type or transmission rate of a control message transmitted to the terminal, based on subscription information received from a unified data management (UDM) or policy information received from a point coordination function (PCF) and the information about the energy level of the terminal, wherein the subscription information or the policy information may include information about an energy class of the terminal determined based on a service priority and an energy consumption level.

According to an embodiment of the present disclosure, the method performed by the AMF in the wireless communication system may further include transmitting the information about the energy level of the terminal to a session management function (SMF), wherein the SMF may determine a protocol data unit (PDU) session to be deactivated, based on the energy level of the terminal, energy class information of the terminal, and session policy information.

According to an embodiment of the present disclosure, a method performed by a terminal in a wireless communication system may include identifying that an energy level of the terminal has changed by a preset criterion or more, transmitting, based on the identification, information about the energy level of the terminal to an access and mobility management function (AMF) through a non-access stratum (NAS) control message, and receiving, from the AMF, information about an energy operation mode determined based on the energy level of the terminal.

According to an embodiment of the present disclosure, in the method performed by the terminal in the wireless communication system, the information about the energy level of the terminal may include information about at least one of a remaining battery capacity of the terminal or a power consumption rate of the terminal.

According to an embodiment of the present disclosure, in the method performed by the terminal in the wireless communication system, the information about the energy operation mode may include information about at least one of a session through which the terminal is to transmit data or a type of a control message that the terminal is to transmit.

According to an embodiment of the present disclosure, an access and mobility management function (AMF) in a wireless communication system may include a transceiver and at least one processor coupled to the transceiver, wherein the at least one processor is configured to receive, based on a change in an energy level of a terminal by a preset criterion or more, information about the energy level of the terminal from the terminal through a non-access stratum (NAS) control message, determine an energy operation mode based on the energy level of the terminal, and transmit information about the determined energy operation mode to the terminal.

According to an embodiment of the present disclosure, a terminal in a wireless communication system may include a transceiver and at least one processor coupled to the transceiver, wherein the at least one processor is configured to identify that an energy level of the terminal has changed by a preset criterion or more, transmit, based on the identification, information about the energy level of the terminal to an access and mobility management function (AMF) through a non-access stratum (NAS) control message, and receive, from the AMF, information about an energy operation mode determined based on the energy level of the terminal.

### Mode for the Invention

Hereinafter, exemplary embodiments of the present disclosure will be described in detail with reference to the accompanying drawings. In this case, it should be noted that, where possible, like reference numerals denote like elements in the accompanying drawings. Also, redundant descriptions of well-known functions and configurations that may obscure the gist of the present disclosure will be omitted.

In describing embodiments of the present disclosure, descriptions of technical contents that are well known in the art to which the present disclosure belongs and are not directly related to the present disclosure will be omitted. This may be to convey the gist of the present disclosure more clearly without obscuring the gist of the present disclosure by omitting unnecessary descriptions.

For the same reason, some elements may be exaggerated, omitted, or schematically illustrated in the accompanying drawings. Also, the size of each element may not completely reflect the actual size thereof. In each drawing, like or corresponding components will be assigned like reference numerals.

The advantages and features of the present disclosure and the accomplishing methods thereof will become apparent from the following description of the embodiments taken in conjunction with the accompanying drawings. However, the present disclosure is not limited to the embodiments described below, and may be embodied in various modes. However, the described embodiments may be provided to make the description of the present disclosure complete and to fully inform those of ordinary skill in the art about the scope of the disclosure. The scope of the present disclosure may be defined by the scope of the claims.

In this case, it may be understood that each block of the drawings showing a processing flowchart and combinations of the processing flowchart drawings may be performed by computer program instructions. Because the computer program instructions may be mounted on a processor of a general-purpose computer, a special-purpose computer, or other programmable data processing apparatuses, the instructions executed through a processor of a computer or other programmable data processing apparatuses may generate a means for performing the functions described in the flowchart block(s). The computer program instructions may also be stored in a computer-usable or computer-readable memory that may be directed to a computer or other programmable data processing apparatuses to implement a function in a particular manner, and the instructions stored in the computer-usable or computer-readable memory may also produce a manufacturing item containing an instruction means for performing the function described in one or more flowchart blocks. Because the computer program instructions may also be mounted on a computer or other programmable data processing apparatuses, a series of operations may be performed on the computer or other programmable data processing apparatuses and instructions for generating a computer-implemented process to perform the computer or other programmable data processing apparatuses may also provide operations for executing the functions described in the flowchart block(s).

Also, each block may represent a module, a segment, or a portion of code that includes one or more executable instructions for performing one or more particular logical functions. Also, it should be noted that the functions described in the blocks may occur out of order in some alternative implementation examples. For example, two blocks consecutively illustrated may be performed substantially simultaneously or may sometimes be performed in reverse order depending on the corresponding functions.

The term "~ unit or part" used herein may refer to a software component or a hardware component such as a field programmable gate array (FPGA) or an application specific integrated circuit (ASIC) and the "~ unit" may be configured to perform particular functions. However, the "~ unit" is not limited to software or hardware. The "~ unit" may be configured to be in an addressable storage medium and may be configured to operate one or more processors. Thus, as an example, the "~ unit" may include components such as software components, object-oriented software components, class components, and task components and may include processes, functions, attributes, procedures, subroutines, segments of program code, drivers, firmware, microcode, circuits, data, databases, data structures, tables, arrays, and/or variables. A function provided in the components and "units" may be combined into the smaller number of components and "units", or may be further divided into additional components and "units". Also, the components and '~ units' may be implemented to play one or more central processing units (CPUs) in a device or a secure multimedia card. Also, in embodiments, the "unit" may include one or more processors and/or devices.

For convenience of description, some terms and names defined in the 3rd Generation Partnership Project Long Term Evolution (3GPP)-based communication standards (e.g., standards of 5th Generation (5G), New Radio (NR), Long Term Evolution (LTE), or similar systems) may be used. However, the present disclosure is not limited to the above terms and names and may also be similarly applied to systems according to other standards.

In the following description, terms for identifying access nodes, terms referring to network entities, terms referring to messages, terms referring to interfaces between network entities, and terms referring to various identification information may be used for convenience of description. Thus, the present disclosure is not limited to the terms described below and any other terms referring to objects having equivalent technical meanings may be used.

In particularly describing embodiments of the present disclosure, a New RAN (NR), which is a radio access network based on the 5G mobile communication standard specified by 3GPP that is a mobile communication standardization organization, and a Packet Core (5G System, 5G Core Network, or Next Generation Core (NG Core)), which is a core network, will be mainly described; however, the main gist of the present disclosure may also be applied to other communication systems having similar technical backgrounds. For example, the main gist of the present disclosure may be applied with some modifications without significantly departing from the scope of the present disclosure, and this may be done at the discretion of those of ordinary skill in the art.

In the 5G system, a network data collection and analysis function (NWDAF), which is a network function of analyzing and providing data collected from the 5G network, may be defined to support network automation. The NWDAF may collect/store/analyze information from the 5G network and provide the result thereof to at least one network function (NF), and each NF may use the analysis result independently.

In the 5G mobile communication system, NFs may be supported to use the collection and analysis results of network-related data (hereinafter referred to as "network data") through the NWDAF. This may be to centralize the collection and analysis of network data necessary for each of the NFs to effectively provide its functions. The NWDAF may collect and analyze network data in units of network slices. However, the scope of the present disclosure is not limited to network slice units, and the NWDAF may additionally analyze various information (e.g., Quality of Service (QoS)) obtained from a user equipment (UE), a protocol data unit (PDU) session, an NF state, and/or an external service server.

The results analyzed through the NWDAF may be transmitted to each of the NFs that have requested the analysis results, and the transmitted analysis results may be used to optimize network management functions such as QoS assurance/improvement, traffic control, mobility management, and/or load balancing.

A unit node performing each of the functions provided by the 5G network system may be defined as an NF (also referred to as NF entity or NF node). For example, each NF may include at least one of an access and mobility management function (AMF) that manages the access and mobility of a terminal (or UE) to an access network (AN), a session management function (SMF) that performs session-related management, a user plane function (UPF) that manages a user data plane, or a network slice selection function (NSSF) that selects a network slice instance available to the terminal.

As wireless communication systems have evolved as described above, the wireless communication systems have become complex and capable of providing various services, and moreover, as the number of apparatuses used in the wireless communication system has increased, a function for allowing efficient energy consumption in many apparatuses of the wireless communication systems without compromising the user service quality has been required.

The present disclosure may define a data transmission control method and apparatus considering network energy efficiency and energy consumption reduction in a wireless communication system.

Technical solutions to be achieved by embodiments of the present disclosure are not limited to the technical solutions mentioned above, and other technical solutions not mentioned herein may be clearly understood from the following description by those of ordinary skill in the art.

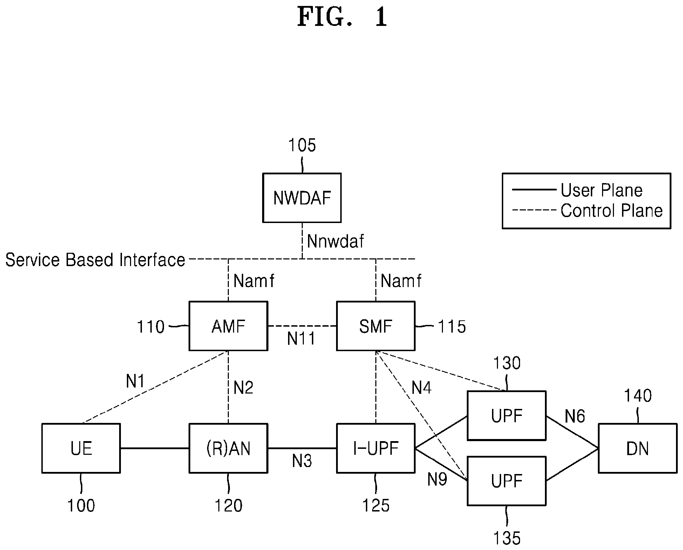

FIG. 1 illustrates a wireless communication network including a network data collection and analysis function (NWDAF) according to an embodiment of the present disclosure.

Referring to FIG. 1, an NWDAF 105 according to an embodiment may collect network data from at least one source NF in various ways. For example, the at least one source NF that is a data collection target of the NWDAF 105 may include NFs in a 5G core network, such as an AMF 110, an SMF 115, UPFs 130 and 135, and an I-UPF 125, an application function (AF) for efficiently providing a service, a network exposure function (NEF), and/or an operation, administration, and maintenance (OAM).

According to an embodiment, the AMF 110 may be connected to a terminal (or UE) 100 and a radio access network (RAN) 120, and the UPFs 130 and 135 and/or the I-UPF 125 may connect the user traffic of the terminal 100 through the RAN 120 to at least one data network (DN) 140.

Also, the NWDAF 105 may provide an analysis of network data collected from the network or the outside, to at least one target NF. The NWDAF 105 may collect and analyze the load level of a network slice instance and provide analysis information to an NSSF so that a particular UE may use the analysis information to select a network slice instance. A service-based interface defined in the 5G network may be used to request analysis information or transmit analysis information including the analysis results between the NFs (e.g., the AMF 110 and the SMF 115) and the NWDAF 105. For example, Hypertext Transfer Protocol (HTTP) and/or JavaScript Object Notation (JSON) documents may be used as a method of transmitting the analysis information; however, a method of transmitting the analysis information according to the present disclosure is not limited thereto.

For example, the collected data of the NWDAF 105 may include at least one of an application identifier (ID) from a point coordination function (PCF), Internet Protocol (IP) filter information, media/application bandwidth, a terminal identifier from the AMF 110, position information, a destination data network name (DNN) from the SMF 115, a terminal IP, a QoS flow bit rate, a QoS flow ID (QFI), a QoS flow error rate, a QoS flow delay, or a traffic usage report from the UPF.

According to an embodiment, the NWDAF 105 may additionally collect information from the OAM, which is an entity (e.g., a network entity) that may affect the connection between the terminal and the service server, in addition to the NFs constituting the core network and use the information for analysis. For example, the information additionally collected and used for analysis may include at least one of the NF resource status, the NF processing capability (throughput), the service level agreement (SLA) information, the UE status from the terminal, the UE application information, the UE usage pattern, the application identifier of the service received from the AF, the service experience, or the traffic pattern.

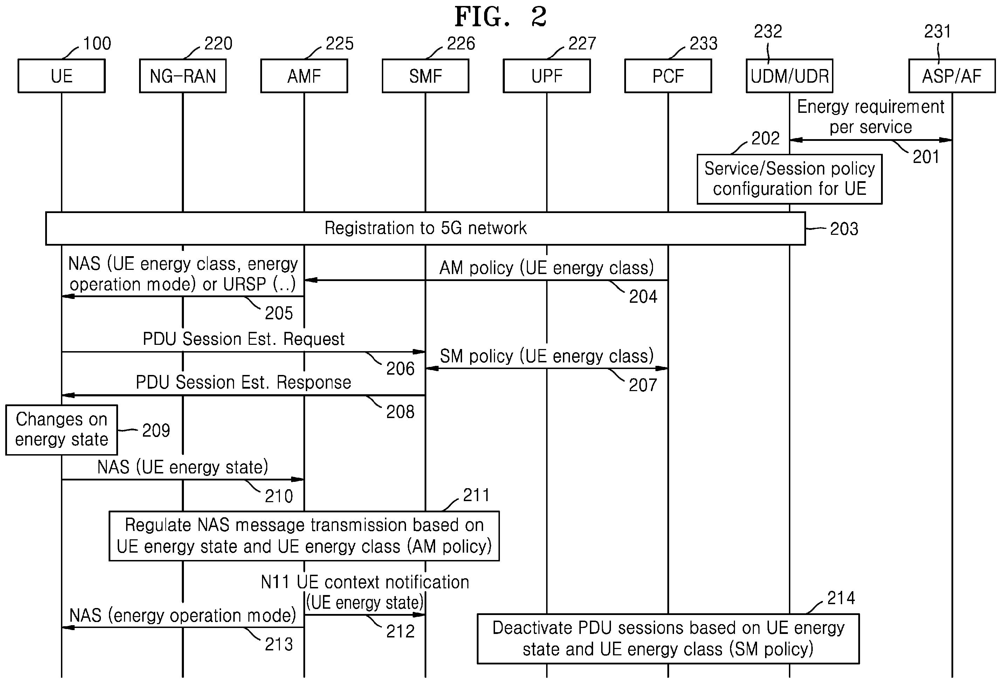

FIG. 2 illustrates a series of signal procedures for controlling data transmission by considering the energy state of a terminal in a wireless communication system, according to an embodiment of the present disclosure.

According to the wireless communication system according to an embodiment, in operation 201, information about the service priority and the energy consumption requirement (criterion) for each service provided by the service provider or for one or more subscriber terminal(s) using the service may be received by a unified data management (UDM) 232, a unified data repository (UDR), or a PCF 233 from an application service provider (ASP) 231 or an application function (AF) for supporting the service provider (through an NEF or through direct signal transmission, depending on the trust relationship between the wireless communication provider and the service provider). For example, the UDM 232 may receive information about the service priority and the energy requirement for one or more terminal(s) (e.g., 100) from the ASP 231. For example, the PCF 233 may receive information about the service priority and the energy requirement for one or more terminal(s) (e.g., 100) from the ASP 231.

For example, the energy consumption requirement (criterion) information for each service or one or more subscriber terminal(s) may include information about an expected energy consumption level (e.g., consumption rate or total consumption) for providing a designated service, and energy state criterion information of the terminal for providing a service. For example, the energy consumption level may indicate the maximum or minimum required level of energy consumed to provide a designated service (e.g., x KWh or y KW/sec). For example, the energy state criterion information of the terminal for providing a service may include parameters indicating information such as the type of the terminal and the minimum battery charge level of the terminal.

For example, the energy consumption requirement (criterion) information for each service or one or more subscriber terminal(s) may be provided to specify the minimum energy consumption level for providing a service, the level of power with which the terminal should be charged, and the like.

According to an embodiment, the UDM 232 or the PCF 233 may store the requirement information received from the ASP 231 or the AF to control data transmission of the corresponding terminal(s).

According to an embodiment, instead of being received from the ASP 231 or the AF, the energy consumption requirement (criterion) information for each service or one or more subscriber terminal(s) may be stored in the UDM 232 or the PCF 233 by the wireless communication provider as a portion of the subscription information of the terminal according to the contract between the terminal and the wireless communication carrier.

In operation 202, the UDM 232 may configure a service/session policy for the terminal(s). However, this is merely an embodiment, and the service/session policy for the terminal(s) may also be configured by the PCF 233.

For example, based on the requirement information and the operator settings received from the ASP 231 or the AF, the UDM 232 or the PCF 233 may configure and store policy information to be applied to transmit data of the corresponding terminal(s) or the corresponding service. For example, based on the requirement information and the operator settings received from the ASP 231 or the AF, the UDM 232 or the PCF 233 may determine and store an energy class of the terminal and apply the energy class to data transmission. For example, based on the requirement information and the operator settings received from the ASP 231 or the AF, when the service priority is low, the energy consumption level (such as consumption rate or total consumption) is high, and the minimum energy state criterion of the terminal for providing a service is high, the energy class of the terminal may be set low (i.e., the terminal with high energy requirement). For example, based on the requirement information and the operator settings received from the ASP 231 or the AF, when the service priority is high, the energy consumption level (such as consumption rate or total consumption) is low, and the minimum energy state criterion of the terminal for providing a service is low, the energy class of the terminal may be set high (i.e., the terminal with low energy requirement).

According to an embodiment, in operation 203, the terminal 100 may perform a registration process with the wireless communication network. For example, the terminal 100 may perform a registration process with the wireless communication network through an NG-RAN 220. According to an embodiment, in the registration process, a request message of the terminal 100 may include current energy level information of the terminal 100.

According to an embodiment, in operation 204, an AMF 225 may receive subscription information of the terminal 100 from the UDM 232, and the subscription information may include the energy class information of the terminal 100 stored in the UDM in operation 201. According to an embodiment, the AMF 225 may receive policy information about the terminal 100 from the PCF 233 (or AM-PCF), and the policy information may include the energy class information of the terminal 100 stored by the PCF 233 in operation 201. According to an embodiment, the current energy level of the terminal 100 may be defined as the remaining battery capacity of the terminal 100 (e.g., KWh, Amh, or the remaining percentage (%) compared to the maximum battery capacity), the current power consumption rate, or the like.

According to an embodiment, in operation 205, the AMF 225 may transmit at least one of the energy class information and the energy operation mode information of the terminal 100 to the terminal 100 through a non-access stratum (NAS) control message. According to an embodiment, the AMF 225 may include at least one of the energy class information and the energy operation mode information of the terminal 100 in URSP information and transmit the URSP information to the terminal 100. According to an embodiment, the AMF 225 may transmit at least one of the energy class information and the energy operation mode information of the terminal 100 to the terminal 100 through a registration acceptance message in the registration process of the terminal 100. According to an embodiment, the energy operation mode of the terminal 100 may include information indicating a service that enables data transmission (or restricts data transmission) by using the energy of the terminal 100 according to the energy level of the terminal 100. According to an embodiment, the terminal 100 may use the energy of the terminal 100 according to the current energy level of the terminal 100 by applying the energy operation mode of the terminal 100, and thus, data transmission may be blocked or the transmission rate (or transmission amount) may be restricted to a certain level or less.

According to an embodiment, in operation 206, the terminal 100 may transmit, to an SMF 226 of the wireless communication network, a PDU session establishment request for transmitting data for each service. According to an embodiment, the PDU session establishment request message of the terminal 100 may include current energy level information of the terminal 100. Also, as an example, the PDU session establishment request transmitted by the terminal 100 may be transmitted to the SMF 226 through at least one of the NG-RAN 220 or the AMF 225.

According to an embodiment, in operation 207, the SMF 226 may perform a process of requesting and receiving policy information to be applied to the session from the PCF 233. According to an embodiment, the PCF 233 may include the energy class information of the terminal 100 in a response message to the session policy information and transmit the response message to the SMF 226. According to an embodiment, the SMF 226 may control data of the terminal 100 transmitted/received through the corresponding PDU session, based on the energy class information of the terminal 100, together with the UPF 227. According to an embodiment, the SMF 226 may instruct the UPF 227 to perform an operation of detecting whether the terminal 100 has transmitted data by correctly applying the energy class and the energy operation mode, based on the energy class information of the terminal 100 and the current energy level information of the terminal 100, or performing control such that only data for each service allowable at the current energy level of the terminal 100 reported by the terminal 100 may be transmitted to the terminal 100.

According to an embodiment, in operation 208, the SMF 226 may transmit a PDU session establishment response message to the terminal 100.

According to an embodiment, in operation 209, the terminal 100 may determine that the current energy level of the terminal 100 has changed by a preset criterion or more.

According to an embodiment, in operation 210, the terminal 100 may transmit information about the current energy level of the terminal 100 to the AMF 225 of the wireless communication network through an NAS control message (or through a designated control message).

According to an embodiment, in operation 211, the AMF 225 may determine to restrict the type of a control message to be transmitted to the terminal 100 in the future or to restrict the transmission rate, based on the subscription information or the policy (e.g., access and mobility management (AM) policy) information received from the UDM 232 or the PCF 233 in operation 203 or 204 and the information about the current energy level transmitted by the terminal 100, and apply the same to transmission of the control message. According to an embodiment, when the current energy level of the terminal 100 is low and the energy class of the terminal 100 is low, the AMF 225 may perform an operation of blocking transmission of other control messages (e.g., terminal configuration change message), other than control messages that are absolutely necessary or urgent for the operation of the terminal 100, or restricting the transmission to a lower frequency. According to an embodiment, the AMF 225 may perform control not to restrict transmission of a control message transmitted to the terminal 100 when the current energy level of the terminal 100 is low and the energy class of the terminal 100 is high. Also, according to an embodiment, the control operation may be reset or changed to reflect a change in the energy class of the terminal 100 or a change in the current energy level of the terminal 100. According to an embodiment, the AMF may transmit state change information of the terminal to an RAN so that the RAN may use the state change information to adjust the priority or frequency of a control message transmitted to the terminal.

According to an embodiment, in operation 212, the AMF 225 may transmit the current energy level information of the terminal 100 to the SMF 226.

According to an embodiment, the SMF 226 may determine a PDU session to be deactivated (or deactivate all PDU sessions), based on the current energy level of the terminal 100, the energy class information of the terminal 100, and the session policy information received from the AMF 225, and control the UPF 227 to perform a procedure of deactivating the PDU session. According to an embodiment, when the current energy level of the terminal 100 is low and the energy class of the terminal 100 (or the energy class applied to some sessions of the terminal 100) is low, the SMF 226 may cause the UPF 227 to deactivate a PDU session (or some PDU sessions) of the terminal 100 to block data transmission.

According to an embodiment, in operation 213, the AMF 225 may transmit new energy operation mode information to be applied to the current energy level of the terminal 100, through an NAS control message to the terminal 100. According to an embodiment, the AMF 225 may designate a session through which the terminal 100 may transmit data in the energy operation mode information or designate the type of a control message that the terminal 100 may transmit (or designate a group of predesignated control messages) or may perform control to restrict the data transmission rate of the terminal 100 or block data transmission until the energy level of the terminal 100 becomes high (e.g., when the battery is recovered to a certain level).

According to an embodiment, in operation 214, the SMF may perform an operation of controlling data transmission of the terminal and the UPF based on at least one of the changed energy state information of the terminal, the operator policy, the session policy, and the energy class of the terminal. According to an embodiment, the SMF may request and receive a new session policy (SM policy) to be applied to the changed energy state of the terminal from the PCF 233 and may generate control information to be applied to the PDU session of the terminal and transmit the control message to the UPF 227. According to an embodiment, the UPF 227 may deactivate the PDU session designated by the SMF, according to the energy state of the terminal 100 and the policy (e.g., session management (SM) policy) determined for the terminal 100 by the SMF.

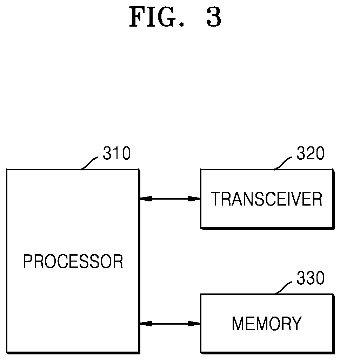

FIG. 3 is a block diagram of a terminal according to an embodiment of the present disclosure.

As illustrated in FIG. 3, the terminal of the present disclosure may include a processor 310, a transceiver 320, and a memory 330. However, the components of the terminal are not limited thereto. For example, the terminal may include more components or fewer components than the above components. Also, the processor 310, the transceiver 320, and the memory 330 may be implemented as a single chip.

According to some embodiments, the processor 310 may control a series of processes such that the terminal may operate according to embodiments of the present disclosure described above. For example, the processor 310 may control the components of the terminal to perform the communication control method considering the power state of the terminal according to embodiments of the present disclosure. The processor 310 may include a plurality of processors, and the processors 310 may execute a program stored in the memory 330 to perform the communication control method considering the power state of the terminal of the present disclosure described above.

The transceiver 320 may transmit/receive signals to/from at least one of a base station or an NF. The transmitted/received signals may include control information and data. The transceiver 320 may include, for example, an RF transmitter for up-converting and amplifying a transmitted signal and an RF receiver for low-noise-amplifying and down-converting a received signal. However, this is merely an embodiment of the transceiver 320, and the components of the transceiver 320 are not limited to the RF transmitter and the RF receiver. Also, the transceiver 320 may receive a signal on a radio channel and output the signal to the processor 310 and may transmit a signal output from the processor 310, on a radio channel.

According to some embodiments, the memory 330 may store programs and data necessary for the operation of the terminal. Also, the memory 330 may store control information or data included in the signals transmitted/received by the terminal. The memory 330 may include a storage medium or a combination of storage mediums such as a ROM, a RAM, a hard disk, a CD-ROM, and a DVD. Also, the terminal may include a plurality of memories. According to some embodiments, the memory 330 may store a program for performing the communication control method considering the power state of the terminal according to embodiments of the present disclosure described above.

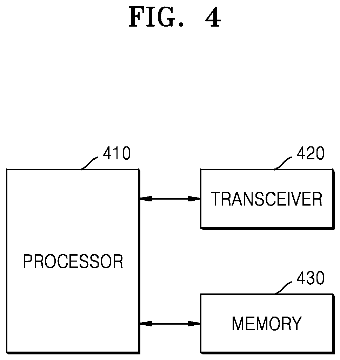

FIG. 4 is a block diagram of a network function (NF) according to an embodiment of the present disclosure.

As illustrated in FIG. 4, the NF (or network entity) of the present disclosure may include a processor 410, a transceiver 420, and a memory 430. However, the components of the NF are not limited thereto. For example, the NF may include more components or fewer components than the above components. Also, the processor 410, the transceiver 420, and the memory 430 may be implemented as a single chip. The NF may include at least one of the AMF, the SMF, the UPF, the PCF, the UDM, or the ASP described above.

The processor 410 may control a series of processes such that the NF may operate according to embodiments of the present disclosure described above. For example, the processor 410 may control the components of the NF to perform the communication control method considering the power state of a terminal according to embodiments of the present disclosure.

The transceiver 420 may exchange signals with the terminal or the base station. The transmitted/received signals may include control information and data. The transceiver 420 may include, for example, an RF transmitter for up-converting and amplifying a transmitted signal and an RF receiver for low-noise-amplifying and down-converting a received signal. However, this is merely an embodiment of the transceiver 420, and the components of the transceiver 420 are not limited to the RF transmitter and the RF receiver. Also, the transceiver 420 may receive a signal on a radio channel and output the signal to the processor 410 and may transmit a signal output from the processor 410, on a radio channel. The processor 410 may include a plurality of processors, and the processors 410 may execute a program stored in the memory 430 to perform the communication control method considering the power state of the terminal according to an embodiment of the present disclosure described above.

According to some embodiments, the memory 430 may store programs and data necessary for the operation of the NF. Also, the memory 430 may store control information or data included in the signals transmitted/received by the NF. The memory 430 may include a storage medium or a combination of storage mediums such as a ROM, a RAM, a hard disk, a CD-ROM, and a DVD. Also, the NF may include a plurality of memories. According to some embodiments, the memory 430 may store a program for performing the communication control method considering the power state of the terminal according to embodiments of the present disclosure described above.

The methods according to embodiments of the present disclosure described in the specification or the claims may be implemented in the form of hardware, software, or a combination of hardware and software.

When the methods are implemented as software, a computer-readable storage medium may be provided to store one or more programs (software modules). The one or more programs stored in the computer-readable storage medium may be configured for execution by one or more processors in an electronic device. The one or more programs may include instructions for causing the electronic device to execute the methods according to embodiments of the present disclosure described in the specification or the claims.

The programs (software modules or software) may be stored in a random access memory, a nonvolatile memory including a flash memory, a read-only memory (ROM), an electrically erasable programmable read-only memory (EEPROM), a magnetic disc storage device, a compact disc-ROM (CD-ROM), a digital versatile disc (DVD) or other forms of optical storage devices, or a magnetic cassette. Alternatively, the programs may be stored in a memory including any combination of some or all thereof. Also, each of the memories may be provided in plurality.

Also, the programs may be stored in an attachable storage device that may be accessed through a communication network such as Internet, Intranet, local area network (LAN), wide LAN (WLAN), or storage area network (SAN), or through a communication network including any combination thereof. The storage device may be connected through an external port to a device implementing an embodiment of the present disclosure. Also, a separate storage device on a communication network may be connected to a device performing an embodiment of the present disclosure.

In particular embodiments of the present disclosure described above, the components included in the present disclosure are expressed as singular or plural depending on particular embodiments presented herein. However, the singular or plural expression is selected suitably for the presented situation for convenience of description, and the present disclosure is not limited to singular or plural components; for example, components expressed as plural may include singular components, or components expressed as singular may include plural components.

Moreover, embodiments of the present disclosure described in the present specification and drawings are merely particular examples to easily describe the technical content of the present disclosure and help to understand the present disclosure, and are not intended to limit the scope of the present disclosure. That is, it will be understood by those of ordinary skill in the art that various changes in form and details may be made in embodiments of the present disclosure without departing from the scope of the present disclosure. Also, the above embodiments may be operated in combination when necessary. For example, portions of an embodiment and another embodiment of the present disclosure may be combined with each other to operate the base station and the terminal. Also, embodiments of the present disclosure may be applied to other communication systems, and other modifications based on the concept of the embodiments may also be implemented.

## Claims

1. A method performed by an access and mobility management function (AMF) in a wireless communication system, the method comprising:
receiving, based on a change in an energy level of a terminal by a preset criterion or more, information about the energy level of the terminal from the terminal through a non-access stratum (NAS) control message;
determining an energy operation mode based on the energy level of the terminal; and
transmitting information about the determined energy operation mode to the terminal.

2. The method of claim 1, wherein the information about the energy level of the terminal comprises information about at least one of a remaining battery capacity of the terminal or a power consumption rate of the terminal.

3. The method of claim 1, wherein the information about the energy operation mode comprises information about at least one of a session through which the terminal is to transmit data or a type of a control message that the terminal is to transmit.

4. The method of claim 1, further comprising restricting a type or transmission rate of a control message transmitted to the terminal, based on subscription information received from a unified data management (UDM) or policy information received from a point coordination function (PCF) and the information about the energy level of the terminal,
wherein the subscription information or the policy information comprises information about an energy class of the terminal determined based on a service priority and an energy consumption level.

5. The method of claim 1, further comprising transmitting the information about the energy level of the terminal to a session management function (SMF),
wherein the SMF determines a protocol data unit (PDU) session to be deactivated, based on the energy level of the terminal, energy class information of the terminal, and session policy information.

6. A method performed by a terminal in a wireless communication system, the method comprising:
identifying that an energy level of the terminal has changed by a preset criterion or more;
transmitting, based on the identifying, information about the energy level of the terminal to an access and mobility management function (AMF) through a non-access stratum (NAS) control message; and
receiving, from the AMF, information about an energy operation mode determined based on the energy level of the terminal.

7. The method of claim 6, wherein the information about the energy level of the terminal comprises information about at least one of a remaining battery capacity of the terminal or a power consumption rate of the terminal.

8. The method of claim 6, wherein the information about the energy operation mode comprises information about at least one of a session through which the terminal is to transmit data or a type of a control message that the terminal is to transmit.

9. An access and mobility management function (AMF) in a wireless communication system, the AMF comprising:
a transceiver; and
at least one processor coupled to the transceiver, wherein the at least one processor is configured to:
receive, based on a change in an energy level of a terminal by a preset criterion or more, information about the energy level of the terminal from the terminal through a non-access stratum (NAS) control message;
determine an energy operation mode based on the energy level of the terminal; and
transmit information about the determined energy operation mode to the terminal.

10. The AMF of claim 9, wherein the information about the energy level of the terminal comprises information about at least one of a remaining battery capacity of the terminal or a power consumption rate of the terminal.

11. The AMF of claim 9, wherein the information about the energy operation mode comprises information about at least one of a session through which the terminal is to transmit data or a type of a control message that the terminal is to transmit.

12. The AMF of claim 9, wherein the at least one processor is further configured to restrict a type or transmission rate of a control message transmitted to the terminal, based on subscription information received from a unified data management (UDM) or policy information received from a point coordination function (PCF) and the information about the energy level of the terminal,
wherein the subscription information or the policy information comprises information about an energy class of the terminal determined based on a service priority and an energy consumption level.

13. The AMF of claim 9, wherein the at least one processor is further configured to transmit the information about the energy level of the terminal to a session management function (SMF),
wherein the SMF determines a protocol data unit (PDU) session to be deactivated, based on the energy level of the terminal, energy class information of the terminal, and session policy information.

14. A terminal in a wireless communication system, the terminal comprising:
a transceiver; and
at least one processor coupled to the transceiver, wherein the at least one processor is configured to:
identify that an energy level of the terminal has changed by a preset criterion or more;
transmit, based on the identifying, information about the energy level of the terminal to an access and mobility management function (AMF) through a non-access stratum (NAS) control message; and
receive, from the AMF, information about an energy operation mode determined based on the energy level of the terminal.

15. The terminal of claim 14, wherein the information about the energy level of the terminal comprises information about at least one of a remaining battery capacity of the terminal or a power consumption rate of the terminal.
